# EUROPÄISCHE PATENTANMELDUNG

(11) **EP 1 350 664 A2**
(43) Veröffentlichungstag der Anmeldung: **08.10.2003**
(21) Anmeldenummer: 03005153.6
(22) Anmeldetag: 07.03.2003
(51) Int. Cl.: B60L 11/18, B66F 9/24

(54) **Flurförderzeug mit Ladefunktion**

(30) Priorität: 25.03.2002 DE 10213210
(71) Anmelder: STILL GMBH, 22113 Hamburg (DE)
(72) Erfinder: Bergmann, Ansgar, 22941 Bargteheide (DE); Fromme, Georg, Dr., 22145 Hamburg (DE); Wede, Marc, 22926 Ahrensburg (DE)
(74) Vertreter: Lang, Michael

(57) **Zusammenfassung**

Die Erfindung betrifft ein batteriebetriebenes Fahrzeug, insbesondere ein Flurförderzeug mit elektronischem Steuergerät (2) und mit eingebauter Ladefunktion. Statt eines separaten Ladegerätes ist erfindungsgemäß vorgesehen, dass das Steuergerät (2) auch die Ladefunktion regelt (Figur).

## Beschreibung

Die Erfindung betrifft ein batteriebetriebenes Fahrzeug, insbesondere ein Flurförderzeug mit elektronischem Steuergerät und mit einer eingebauten Ladefunktion.

In der Regel müssen batteriebetriebene Elektro-Fahrzeuge, wie Elektro-Flurförderzeuge zum Aufladen der Batterie an eine Ladestation gebracht werden. Dies ist nicht immer bequem, besonders dann, wenn die nächste Ladestation weit entfernt ist. Daher beschäftigen sich die Konstrukteure von Elektro-Flurförderzeugen bereits seit der Pionierzeit dieser Geräte mit dem Anbringen von eingebauten Ladegeräten. Diese haben den Vorteil, dass über das eingebaute Ladegerät jederzeit und überall, wo eine Steckdose in der Nähe ist, das Aufladen der Batterie erfolgen kann.

Bekannt sind weiterhin Flurförderzeuge mit eingebautem Ladegerät. Die Traktionsbatterie des Fahrzeugs kann dann während der Ruhephasen an der nächsten Steckdose aufgeladen werden. Damit entfällt der Batteriewechsel bzw. das Vorhalten einer Ladestation. Diese On-Board-Ladegeräte werden in der Regel als separate Geräte in die Flurförderzeuge eingebaut. Die Funktion eines Ladegeräts besteht in der potentialfreien Umwandlung der Netzspannung in eine Gleichspannung sowie in der geregelten Einstellung der Ladespannung bzw. des Ladestromes entsprechend dem Ladezustand und den Anforderungen der Batterie. Moderne Geräte enthalten üblicherweise einen primärgetakteten und höherfrequent arbeitenden Wandler. Die Regelung erfolgt durch einen Mikrorechner.

Aus der DE 199 22 137 A1 ist ein Flurförderzeug mit einem Batterieblock bekannt, der einen Datenspeicher aufweist. Zum Aufladen ist ein normales Ladegerät notwendig.

Aus der DE 196 52 950 A1 ist ein Flurförderzeug bekannt, bei dem das Ladegerät als Bestandteil der Antriebssteuerung im Fahrzeug mitgeführt werden kann. Der Fahrmotor hat eine ganz besondere Wicklung, die zum Aufladen mitbenutzt wird. Ein solcher speziell ausgerüsteter Motor mit Spezialwicklung und Abgriffen ist aufgrund der kleinen Stückzahlen relativ teuer.

Auf der anderen Seite sind batteriebetriebene Flurförderzeuge bekannt, die mit einem oder mehreren elektronischen Steuergeräten ausgerüstet sind. Zu den wesentlichen Funktionen der Steuergeräte zählen:
- Ansteuerung der Antriebsmotore
- Aktuierung von Hydraulikelementen, wie z.B. Proportionalventilen
- Schnittstellen für die Bedienung und die Fahrerinformation
- Zusatzfunktionen wie z.b. Ansteuerung von Relais oder Bremsen und
- Überwachung und Regelung des Fahrzeugs.

Heutige Steuerungen sind in der Regel mit einem oder mehreren Mikrorechnern bestückt. Der Funktionsumfang sowie die Größe der Steuergeräte variiert mit der Komplexität des Fahrzeugs. Unter dem steigenden Kostendruck steht wie auch bei den übrigen Komponenten eines Flurförderzeuges die Minimierung des Hardwareaufwandes für Steuergeräte im Vordergrund. Dies gilt insbesondere für Fahrzeuge der unteren Leistungsklasse und bei hohen Stückzahlen.

Da eingebaute Ladegeräte gerade bei diesen kleinen Geräten einen nicht unerheblichen Kostenfaktor darstellen, ist es Aufgabe der Erfindung, ein batteriebetriebenes Flurförderzeug mit einem eingebauten Ladegerät vorzuschlagen, das billiger hergestellt werden kann.

Diese Aufgabe wird erfindungsgemäß gelöst von einem Fahrzeug mit den Merkmalen des Anspruchs 1. Ausführungen der Erfindung sind Gegenstände von Unteransprüchen.

Erfindungsgemäß übernimmt also das fahrzeugeigene, bereits vorhandene Steuergerät auch die Ladefunktion. Unter dem genannten Kostendruck ist es sinnvoll, Steuergerät und On-Board-Ladegerät soweit wie möglich unter Ausnutzung der - bei getrenntem Aufbau - zweifach vorhandenen Bauelemente zu vereinen. Beide Geräte verfügen z.b. über einen Mikrorechner, enthalten Strommesstechnik, Spannungsversorgung und weiter ähnliche Baugruppen.

Erfindungsgemäß werden also für den Arbeitseinsatz des Fahrzeugs benötigte Komponenten der Fahrzeugsteuerung auch für die Batterieladung mitbenutzt. Die für den Ladevorgang benötigten Einrichtungen sind im Wesentlichen die der sowieso vorhandenen Fahrzeugsteuerung sowie einige Zusatzelemente, wie ein Wandler. Der Motor oder seine Bauteile werden beim Laden nicht benutzt. Daher können beliebige Motoren eingesetzt werden, gleich ob Gleichstrom- Wechselstrom- oder Drehstrommotoren.

Bevorzugt wird als separater Spannungswandler ein AC-DC-Wandler verwendet, der die Netzspannung auf die niedrige Voltzahl der Batterie bringt. So muß nicht die Motorwicklung (als Drossel, als Sonderwicklung mit Abgriffen) verwendet werden wie bei der DE 196 52 950 A1. Günstig ist es, einen hochfrequent getakteten Spannungswandler einzusetzen, da diese Geräte preisgünstig sind und nur ein kleines Volumen haben. Solche Wandler arbeiten im Bereich über 1 kHz, bevorzugt zum Beispiel mit 30 kHz. Der erfindungsgemäß integrierte Spannungswandler ist also auf die Ladefunktion abgestimmt und nicht auf den Fahrbetrieb. Erfindungsgemäß kann auch auf Umrichter oder Pulswechselrichter verzichtet werden, die der Stand der Technik nach DE 196 52 950 A1 zusätzlich zu den speziellen Motorwicklungen benötigt.

Da der Ladevorgang u.a. aus Sicherheitsgründen nur bei abgeschaltetem Antriebssystem des Fahrzeugs geschehen darf, können die bisher abgeschalteten Systeme des Steuergeräts erfindungsgemäß für die Ladegerätefunktion eingesetzt werden.

In einer ersten Ausführung der Erfindung muss das Steuergerät eines Flurförderzeugs lediglich mit einem Spannungswandler ergänzt werden, der aus der Netzspannung eine Gleichspannung entsprechend dem Niveau der Batteriespannung macht. Die Ansteuerung des Wandlers sowie die Regelung des Ladevorgangs wird vom Mikrorechner der Fahrzeugsteuerung übemommen. Ferner können z.b. Bauelemente des Leistungsstellers für den Fahrantrieb ebenso für den Ladevorgang genutzt werden. So kann z.B. der vorhandene Strommesser zum Messen des Ladestromes eingesetzt werden.

In einer Ausführung der Erfindung können die von der Fahrzeugsteuerung während des Betriebs gesammelten Daten über die Belastung der Batterie unter Berücksichtigung der Batterieparameter auch für den Ladevorgang genutzt werden. So kann z.b. das Strom-Spannungsprofil optimal dem aktuellen Lade- oder Belastungszustand der Batterie angepasst werden. Umgekehrt ist die Fahrzeugsteuerung und damit der Batterie-Entlade-Anzeiger bei Wiederaufnahme des Betriebs nach einem Ladevorgang über den Ladezustand der Batterie weitestgehend informiert, weshalb eine sichere Überwachung des Ladezustands gewährleistet ist.

Die Erfindung hat folgende Vorteile:
- Kostenreduzierung gegenüber der heutigen Lösung
- Geringeres Bauvolumen und damit geringerer Platzbedarf im Fahrzeug
- Geringeres Ausfallrisiko aufgrund der reduzierten Anzahl an Bauelementen und
- Schonung und bessere Ausnutzung der Batterie durch Steuerung des Ladeund Entladevorganges über denselben Mikrorechner.

In einer Ausführung der Erfindung kann der Spannungswandler vollständig in dem Fahrzeugsteuergerät integriert sein. Das Gesamtgerät kann dann preiswerter hergestellt werden als ein herkömmliches Gerät mit getrennter Steuerung und getrenntem eingebauten Ladegerät.

In einer anderen Ausführung kann der Spannungswandler eine eigene Add-On-Komponente (Zusatzbaugruppe oder nachrüstbare Baugruppe) sein und über ein geeignetes Kontaktsystem an das Steuergerät angedockt werden. Dies erfordert einen etwas höheren Aufwand, bietet aber die Möglichkeit, ein On-Board-Ladegerät optional anzubieten, wodurch auch Geräte, die bisher kein Ladegerät hatten, umgerüstet werden können. Daneben können unterschiedliche Geräte verschiedener Leistungsklassen angeboten werden, um damit die Anforderungen des Betreibers für seinen individuellen Fuhrpark optimal abzudecken.

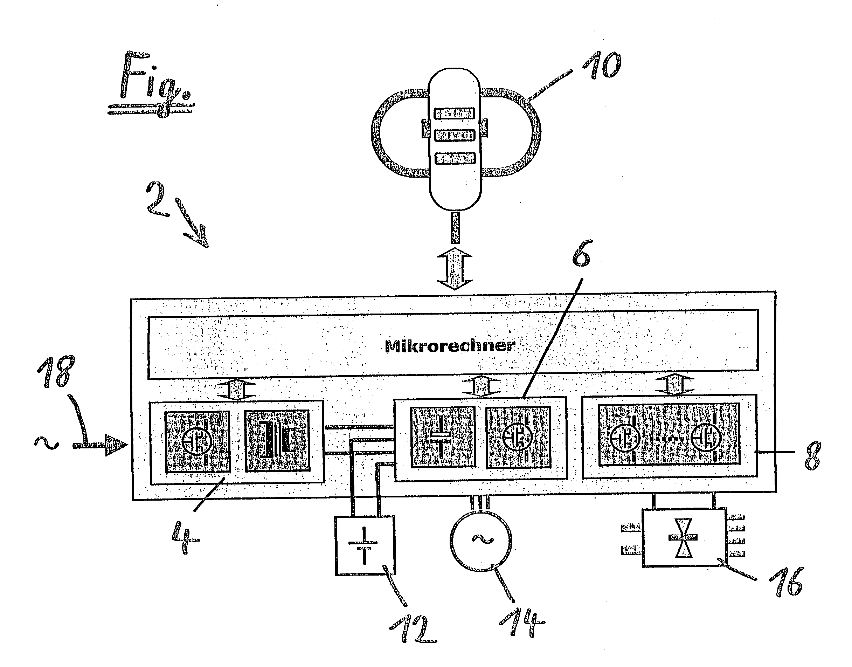

Eine Ausführung der Erfindung wird anhand einer Figur näher erläutert. Die Figur zeigt ein erfindungsgemäßes Steuergerät 2 für ein batteriebetriebenes Flurförderzeug mit integriertem Ladegerät. Das Steuergerät 2 enthält hier einen Mikrorechner (Control Unit), als Ladegerät einen Wandler 4, für den Fahrantrieb ein Wechselrichter-Leistungsteil 6 und für Zusatzfunktionen einen Treiber 8. Der Wandler 6 ist ein primär getakteter Wandler mit Potentialtrennung. Das Wechselrichter-Leistungsteil 6 weist einen Zwischenkreis und eine Drehstrombrücke auf. Das Steuergerät 2 arbeitet mit einer Deichsel 10 zusammen, über die der Bediener die Fahrbefehle und die Befehle für das Anheben und Senken der Last oder weitere Befehle eingibt, ferner mit der Batterie 12, dem Drehstrommotor 14 des Fahrantriebes und mit weiteren Ventilen oder Relais usw. für Zusatzfunktionen, die hier in dem mit 16 bezeichneten Bauteil zusammengefasst sind. Links ist ein Netzanschluss 18 zum Anschließen an eine normale Steckdose zum Aufladen der Batterie 12 vorgesehen. Deutlich zu erkennen ist, dass bei dieser Ausführung der Erfindung kein eigenes komplettes Ladegerät vorhanden sein muss, sondern dass zum Laden Teile des Steuergeräts 2 mitverwendet werden. So wird z.B. der Mikrorechner zur Steuerung und Regelung des Ladestrom mit verwendet. Auch Komponenten des Wechselrichter-Leistungsteiles 6, wie z.b. Strommess- oder Steuergeräte, können zum Laden der Batterie 12 mit verwendet werden. So ist die Batterie 12 nicht direkt am Ladegerät 4, sondern am Wechselrichter-Leistungsteil 6 angeschlossen. Ein direkter Anschluss der Batterie 12 an das Ladegerät 4 ist aber ebenso möglich. Der Mikrorechner des Steuergeräts 2 regelt auch diesen Wandler 4.

## Patentansprüche

1. Batteriebetriebenes Fahrzeug, insbesondere Flurförderzeug mit elektronischem Steuergerät (2) und mit eingebauter Ladefunktion, **dadurch gekennzeichnet, dass** das Steuergerät (2) auch die Ladefunktion regelt.

2. Fahrzeug nach Anspruch 1, **gekennzeichnet durch** einen im Fahrzeug installierten Spannungswandler (4), der von dem Steuergerät (2) angesteuert wird, insbesondere einen hochfrequent getakteten Spannungswandler (4) , der ein AC-DC-Wandler ist.

3. Fahrzeug nach Anspruch 1 oder Anspruch 2, **dadurch gekennzeichnet, dass** das Steuergerät (2) gespeicherte Betriebsdaten zur Steuerung der Ladung und/oder zur Steuerung des Fahrbetriebs (der Endladung) verwendet.

4. Fahrzeug nach Anspruch 2 oder Anspruch 3, **dadurch gekennzeichnet, dass** der Spannungswandler (4) im Fahrzeug integriert ist.

5. Fahrzeug nach Anspruch 2 oder Anspruch 3, **dadurch gekennzeichnet, dass** der Spannungswandler (4) eine eigene Komponente ist.
